# EUROPEAN PATENT APPLICATION

(11) **EP 0 915 466 A2**
(43) Date of publication of application: **12.05.1999**
(21) Application number: 98650070.0
(22) Date of filing: 06.11.1998
(51) Int. Cl.: G11B 20/12, G11B 5/012

(54) **Servo sector architecture for a high-density, removable media-type disk**

(30) Priority: 06.11.1997 US 965111
(71) Applicant: Caleb Technology Corporation, Boulder, Colorado 80301 (US)
(72) Inventor: Hogan, Paul Jay, Colorado 80304 (US); Vincent-Adams, Patricia M., Colorado80304 (US); Mathews, Harlan, Colorado 80304 (US); Tan, Hong, Colorado 80501 (US)
(74) Representative: McCarthy, Denis Alexis

(57) **Abstract**

An improvement in a high density, removable media-type disk (10) for rotational use in a floppy disk drive having a read/write head is provided. The disk includes one or more servo sectors (28). The improvement comprises certain magnetically written information on the disk readable by the read/write head during normal operation of the disk drive, the information includes a constant frequency field (34), a gap (46,48) and servo timing mark field (36), a gray encoded address field (38), a binary address field (40), and a position field (42).

## Description

### BACKGROUND OF THE INVENTION

### 1. Field of the Invention

This invention relates generally to removable media-type disks for rotational use in a floppy disk drive and, more particularly, it relates to formatting of servo sector architecture on a high-density, removable media-type disk for rotational use in a floppy disk drive and to the floppy disk itself.

### 2. Description of the Prior Art

In the past, soft or removable media-type disks for rotational use in a floppy disk drive have been known for quick and easy storage of a user's data. However, most of the removable media-type disks are "low density", e.g., the removable media-type disk has a density of less than two (2) to three (3) MB.

Unlike current low density, removable media-type disks in floppy drives, accurately positioning the heads at the desired position over the disk in a hard disk drive is generally accomplished by formatting certain servo information on one or more of the disk surfaces for use by the magnetic heads in determining the head's positional orientation over the disk. Previously, in low density floppy drives, stepper motors were used to position the actuator and the head. Thus, even though sectored servo pattems allow greater storage capacity when using a voice coil actuator, sectored servo systems were not used in floppy drives.

In sector-servo (also known as embedded servo) hard disk drives, the servo information is interspersed with data on each disk surface. The sector servo approach has the advantage of providing the positioning information close to the data sectors the positioning information identifies, thereby eliminating sources of track misregistration which otherwise tend to limit track density. However, a disadvantage of the sector servo format as generally used today is that the sector servo incurs additional overhead storage requirements in order to permit smooth transitions between data regions and servo regions.

Much attention has been focused in recent years in the hard drive industry on reducing the overhead associated with sector servo architectures in hard disk drives. One example, known as the no-ID or headerless format uses servo sectors to identify the data sectors and completely eliminate the use of a data ID region. Using the no-ID format, each sector on a track is composed of two regions: a servo region and a data region. The servo sectors are located using a servo ID mark or address mark. Each data sector is identified with the servo sector's cylinder, head, and sector number counted from an index location. No separate data ID field is required since all address information is in the servo field. This format is the same for all sectors on all tracks of the disk.

A second strategy in the hard disk drive industry, which has been used to improve recording density in sector servo hard disk drives in recent years, is known as zone bit recording (ZBR). In ZBR hard disk drives, the disk is divided into multiple zones oriented in the radial direction. Each zone is comprised of a set of tracks. Since tracks in the outer zones are longer than the tracks in the inner zones, the tracks in the outer zones can store more data at a given bit density than the tracks in the inner zones. Typically, data is stored in sectors, each of which has the same number of data bytes. In this configuration, the additional capacity in the outer zones is utilized by having a larger number of data sectors on each track in the outer zones. This results in the number of data sectors per track varying from zone to zone with some of the data sectors being split by a servo sector. In order to provide a constant servo sampling rate for all zones, a single fixed number of servo sectors is used across the entire disk.

Accordingly, there exists a need for a servo sector architecture which effectively combines the ZBR and no-ID formats in a high density, removable media-type disk drive for rotational use in a floppy disk drive, which specific servo sector architecture enables the data recording head to locate and identify data sectors for both read and write operations.

### SUMMARY OF THE INVENTION

The present invention is an improvement for a high density, removable media-type disk for rotational use in a floppy disk drive having a read/write head. The disk includes one or more servo sectors. The improvement comprises certain magnetically written servo information on the disk readable by the read/write head during normal operation of the disk drive, the information includes a constant frequency field, a gap and servo timing mark field, a gray encoded address field, a binary address field, and a position field.

In an embodiment of the present invention, the improvement comprises the gap and servo timing mark field being positioned downstream from the constant frequency field, the gray encoded address field being positioned downstream from the gap and servo timing mark field, the binary address field being positioned downstream from the gray encoded address field, and the position field being positioned downstream from the binary address field. In another embodiment of the present invention, the improvement comprises the information within each of said servo sectors consisting essentially of the constant frequency field, the gap and servo timing mark field being positioned downstream from the constant frequency field, the gray encoded address field being positioned downstream from the gap and servo timing mark field, the address field being positioned downstream from the gray code field, and the position field being positioned downstream from the address field.

In yet another embodiment of the present invention, the disk includes a plurality of servo sectors and wherein the servo sectors are equally angularly spaced. Preferably, the disk has between approximately eighty (80) and approximately two hundred (200) servo sectors per track or servo wedges. Furthermore, preferably, the disk has ninety (90) equally angularly spaced servo sectors.

The information in the servo sector can be described in terms of clock cells. One clock cell can be referenced to a physical location on the disk as a unit of rotational arc. The physical length of one clock cell is 2π/360,000. There are 360,000 clock cells per revolution of the disk, and four thousand (4000) clock cells per sector (comprised of servo section and data section).

In still another embodiment of the present invention, the gap and servo timing mark field has a first space, a first pulse downstream from the first space, a second space downstream from the first pulse, and a second pulse downstream from the second space. Preferably, the first space has a length of twelve (12) clock cells and the second space has a length of six (6) clock cells. It is to be understood that one angular measurement unit, as used herein, equals 2π/360,000. In a preferred embodiment, the first pulse is a positive pulse and the second pulse is a negative pulse.

In yet another embodiment of the present invention, the gray encoded address field has a length of approximately seventy-two (72) clock cells.

In an embodiment of the present invention, the binary address field has a length of approximately seventy-two (72) clock cells. Furthermore, preferably, the binary address field has sector information, head information, index information, and at least one (1) reserved bit for each servo sector. In a preferred embodiment, the binary address field has one (1) head bit, seven (7) sector bits, one (1) index bit, and at least one (1) reserved bit (where one bit is equal to six encoded clock cells).

In another embodiment of the present invention, the position field has a length of approximately eighty (80) clock cells. Furthermore, preferably, the position field comprises four (4) position sub-fields within the position field and further comprises a two (2) clock cell space between each of the position sub-fields.

In yet another embodiment of the present invention, the disk includes a data section containing data fields and wherein none of the data fields includes identification information thereby providing additional data density on the disk. Preferably, the data field comprises between approximately one (1) and sixteen (16) data zones. Furthermore, preferably, the data field comprises eight (8) data zones.

In still another embodiment of the present invention, the improvement further comprises eight (8) clock cells between the position field and the data field.

In still a further embodiment of the present invention, the improvement also comprises a disk cover or cartridge surrounding the disk. The disk and disk cartridge are configured to operate within a high density disk drive with the disk cartridge being sized and shaped to conform to the size and shape of a standard 3.5 inch disk cartridge whereby the size and shape of the standard disk and disk cartridge will not preclude it from being properly operated within the high density drive.

The present invention is also an improvement to a high density, removable media-type disk for rotational use in a floppy disk drive. The disk has at least one servo sector field and at least one data field per track. The improvement comprises identification information in the servo sector field with the data field being free from identification information.

The present invention is further an improvement to a high density, removable media-type disk drive. The disk drive has a recording head for writing information on and reading information from the disk. The improvement comprises read/write means operating in a high density mode for reading from or writing to a high density disk and alternatively operating in a low density mode for reading from and writing to a low density disk.

In an embodiment of the present invention, the means for reading from or writing to a high density disk and alternatively for reading from and writing to a low density disk include a rotating mechanism which rotates at a first slower speed when operating in the low density mode and a second faster speed when operating in said high density mode.

In another embodiment of the present invention, the read/write means include operating the rotating mechanism such that the rotating mechanism rotates at the slower speed first and then increases to the second faster speed.

In yet another embodiment of the present invention, the improvement further comprises a spin mechanism for reading the disk in a high density mode and determining whether a low or high density disk is present while the spin mechanism operates at the low density speed. If the disk is a high density disk, the spin mechanism will then rotate the disk at the second faster speed.

In still another embodiment of the present invention, the improvement comprises the first speed being approximately 600 rpm and the second speed being approximately 1000 rpm.

The present invention further includes a method of operating a disk drive. The method comprises the steps of providing a high density, removable media-type disk drive which is configured to receive a high density disk or a low density disk, inserting a low density disk into a predetermined operating position within a receiving chamber of the disk drive and reading information from and/or writing information to the low density disk, and alternatively inserting a high density disk into a predetermined operating position within the same receiving chamber of the disk drive and reading information from and/or writing information to the high density disk.

In an embodiment of the present invention, the method further includes the step of initially operating the disk drive in a predetermined manner to allow the disk drive to determine whether the disk is a high density disk or a low density disk.

In addition, the present invention is a high density, removable media-type disk for rotational use in a floppy disk drive having a read/write head. The disk has at least one servo sector and at least one data field. The disk comprises between approximately eighty (80) and approximately two hundred (200) servo sectors or servo wedges per track.

In an embodiment of the present invention, the servo sectors are equally angularly spaced. Preferably, the disk has ninety (90) servo sectors or servo wedges per track.

In another embodiment of the present invention, the disk further comprises certain information readable by the read/write head during normal operation of the disk drive. The information includes a constant frequency field, a gap and servo timing mark field being positioned downstream from the constant frequency field, a gray encoded address field being positioned downstream from the gap and servo timing mark field, a binary address field being positioned downstream from the gray code field, and a position field being positioned downstream from the address field.

Moreover, the present invention is an improvement to a high density, removable media-type disk for rotational use in a floppy disk drive. The disk includes one or more servo sectors per track. The improvement comprises means on the disk for identifying if the disk is a low density disk or a high density disk. Preferably, the means comprise certain information within the servo sector.

Furthermore, the present invention is a disk drive system having a floppy disk drive for rotating a high density, removable media-type disk. The disk has at least one servo sector and at least one data field per track. The system comprises a disk drive having a read/write head, a high density, removable media-type disk operated by the disk drive with the disk containing certain information readable by the read/write head during normal operation of the disk drive. The information includes a constant frequency field, a gap and servo timing mark field, a gray encoded address field, a binary address field, and a position field.

In an embodiment of the present invention, each data field is free from identification information thereby providing additional data density on the disk.

In another embodiment of the present invention, the position field comprises four (4) position sub-fields within the position field. Preferably, a pad is positioned between each of the position sub-fields. Furthermore, preferably, a pad is positioned between the position field and the data field.

In yet another embodiment of the present invention, the system further comprises a disk cartridge surrounding the disk. The disk and disk cartridge are configured to operate within a high density disk drive with the disk cartridge being sized and shaped to conform to the size and shape of the standard 3.5 inch disk cartridge whereby the standard disk and disk cartridge is also receivable within the high density drive.

### BRIEF DESCRIPTION OF THE DRAWINGS

FIG. 1 is a schematic diagram illustrating a disk having servo sector architecture constructed in accordance with the present invention;
FIG. 2a is a schematic diagram illustrating the servo sector architecture constructed in accordance with the present invention;
FIG. 2b is a pulse diagram illustrating the servo sector architecture constructed in accordance with the present invention;
FIG. 3a is a schematic diagram illustrating the binary address field of the servo architecture constructed in accordance with the present invention;
FIG. 3b is a diagram illustrating the encoded data for the gray encoded address field and the binary address field of the servo sector architecture constructed in accordance with the present invention;
FIG. 4a is a pulse diagram illustrating the servo timing field of the servo sector architecture constructed in accordance with the present invention;
FIG. 4b is a schematic diagram illustrating the clock cells (AMU) of the servo sector architecture constructed in accordance with the present invention;
FIG. 5 is a plan view illustrating a disk and disk drive constructed in accordance with the present invention; and
FIG. 6 is a perspective view illustrating the compatibility of a standard low density disk and a high density disk constructed in accordance with the present invention in a disk drive constructed in accordance with the present invention.

### DETAILED DESCRIPTION OF THE PREFERRED EMBODIMENTS

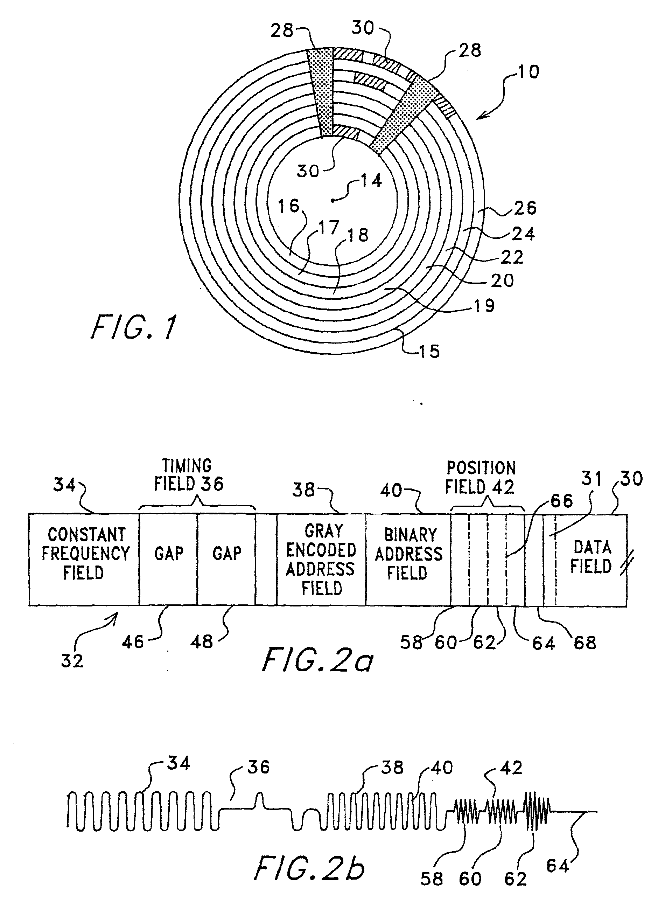

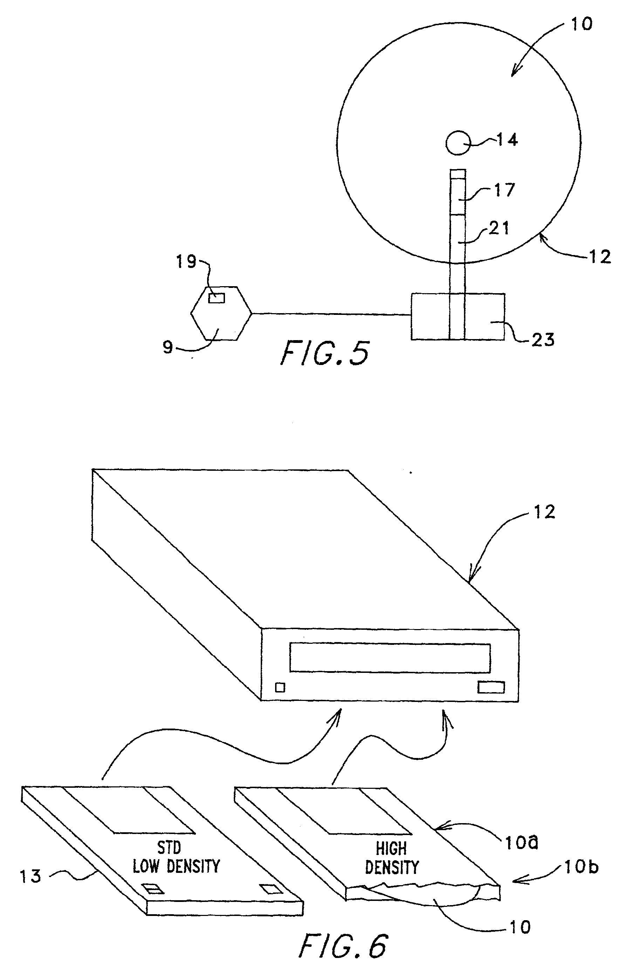

As illustrated in FIG. 1, the present invention is a high density, removable media-type disk, indicated generally at 10, for rotational use in a high density, removable media-type floppy disk drive 12, as illustrated in FIG. 5. The disk 10 is formatted using a fixed block architecture with sector servo and zone-bit recording. The disk 10 of the present invention allows greater track density derived from the use of a voice coil actuator instead of a stepper motor.

As illustrated in FIG. 5, the disk drive 12 includes the data recording disk 10, a voice coil actuator arm 21, a data recording transducer 17 (also called a recording head), a voice coil motor 23, servo electronics, read/write electronics, interface electronics, formatter electronics, all of which are generally indicated at 9, a microprocessor 19 including RAM. As illustrated in FIG. 1, the data recording disk 10 includes a center of rotation 14, and is divided for head positioning purposes into a set of radially spaced tracks 15. The tracks are grouped radially into a number of constant frequency regions or zones, six of which are shown as 16, 18, 20, 22, 24, and 26.

The disk 10 of the present invention contains a plurality of servo wedges or sectors 28 per track, which extend across the tracks 15 in a generally radial direction from the center of rotation 14. It is preferred that the number of servo wedges or sectors 28 per track be maintained at a minimum to maximize the data density capacity of the disk 10. Preferably, in the present invention, the disk 12 includes between approximately eighty (80) and approximately two hundred (200) equally angularly spaced servo sectors or wedges 28 per track although a disk having less than approximately eighty (80) servo wedges or sectors per track and greater than approximately two hundred (200) servo wedges or sectors per track is within the scope of the present invention. It should be noted that by decreasing the amount of servo wedges sectors 28 per track, the amount of servo sector information available per revolution of the data recording disk 10 to correctly position the transducer 17 is compromised while by increasing the amount of servo wedges or sectors 28 per track, the amount of disk space available for storage is decreased. The inventors of the present application have discovered that, based on a trade-off between disk storage capacity and servo needs, the optimum number of servo wedges or sectors 28 per track is actually approximately ninety (90) equally angularly spaced servo wedges or sectors 28 per track.

Within each zone 16-26, the tracks 15 are also circumferentially divided into a number of data fields or sectors 30. As will be discussed hereafter, the data fields 30 contain no sector ID fields thereby providing additional data density on the data recording disk 10. In accordance with the present invention, the identification information needed by the disk drive to correctly position the transducer 17 over the disk 10 is provided entirely within the servo sectors 28 on the data recording disk 10. The actual information and configuration of the servo sectors 28 of the disk 10 of the present invention will be discussed in further detail below.

The data recording disk 10 of the present invention has a plurality of data zones 16-26 thereby increasing the data storage capacity of the data recording disk 10 as contrasted with a typical low density, single zone floppy disk. Preferably, in the disk 10 of the present invention, there are as many as sixteen (16) zones 16-26, although a disk 10 having greater than sixteen (16) data zones 16-26 is within the scope of the present invention. Since a small number of zones 16-26 reduces the amount of data storable on the disk 10 and a high number of data zones 16-26 requires more microcode to implement and maintain, the inventors of the present invention have discovered that the optimum number of data zones 16-26 for optimum functionality of the disk drive 12 is actually approximately eight (8) data zones 16-26.

As illustrated in FIG. 2a, a constant frequency field 31 assists the read/write electronics in synchronizing stored data in the data sector 30 on the disk 10. The length and positioning of the constant frequency field 31 is directly related to the rotational spin speed of the disk 10 and the data rate in the data zones 16-26.

In accordance with the normal meaning of "fixed block architecture", all data sectors 30 on the data recording disk 10 are substantially the same size, expressed in bytes of data. However, it is within the scope of the present invention to have variation in the data sector size, such as from 128 bytes per data sector 30 to 4098 bytes per data sector 30, in the event that such a configuration is desirable for a particular implementation. The number of data sectors 30 per track 15 varies from zone to zone, and some of the data sectors 30 do not begin immediately following a particular servo sector 28. Further, some of the data sectors 30 are split by servo sectors 28, as best illustrated in FIG. 1.

As illustrated in FIG. 2a, a detailed schematic diagram of the servo sector architecture for an exemplary track 15 from a data recording disk 10 in accordance with the present invention is provided. A portion of the track 15 is illustrated at 32, containing a servo sector 28 and part of a data sector 30. The data sectors 30 are separated from one another by the servo sectors 28.

As illustrated in FIG. 2b, details of the contents of the servo sector 28 in the form of electrical signals are provided. A constant frequency field 34 is used to allow the read/write electronics to switch from a data writing operation to a servo reading operation, and to allow for fluctuations in the data recording disk's 10 rotational speed. The transducer 17 reads information from the servo sector 28 to locate the correct address for the transducer 17 to read from or write to the disk surface of the data recording disk 10. Basically, the transducer 17 reads the position from the servo sector 28 and the microprocessor 19 instructs the transducer 17 where to go on the data recording disk 10.

The sector servo 28 of the disk 10 of the present invention comprises certain information readable by the read/write head during normal operation of the disk drive. The information includes a constant frequency field 34, a gap and servo timing mark field 36, a gray encoded address field 38, a binary address field 40, and a position field 42. Preferably, the information is in a specific sequentially readable order with the constant frequency field 34 being read first. The gap and servo timing mark field 36 is positioned downstream from the constant frequency field 34, the gray encoded address field 38 is positioned downstream from the gap and servo timing mark field 36, the binary address field 40 is positioned downstream from the gray encoded address field 38, and the position field 42 is positioned downstream from the binary address field 40. It should be noted, however, that is within the scope of the present invention to have the order in which the information is read by the transducer 17 be altered, i.e., having the binary address field 40 precede the gray encoded address field 38, although the positional arrangement illustrated is preferred.

The constant frequency field 34 of the sector servo 28 of the disk 10 of the present invention is a signal having a continuous frequency which allows the disk drive 12 to synchronize the read/write signal to the rotational data in order to detect and acquire the gap and servo timing mark 36 of the servo sector 28. The final size of the constant frequency field 34 is determined by the read/write electronics within the disk drive. It should be noted that when the sector servos 28 of the disk 10 are initially servo written on the disk 10, the constant frequency field 34 is written between each servo field. As data sectors are written to the disk, the constant frequency field 34 is overwritten except for a portion required by the read/write electronics.

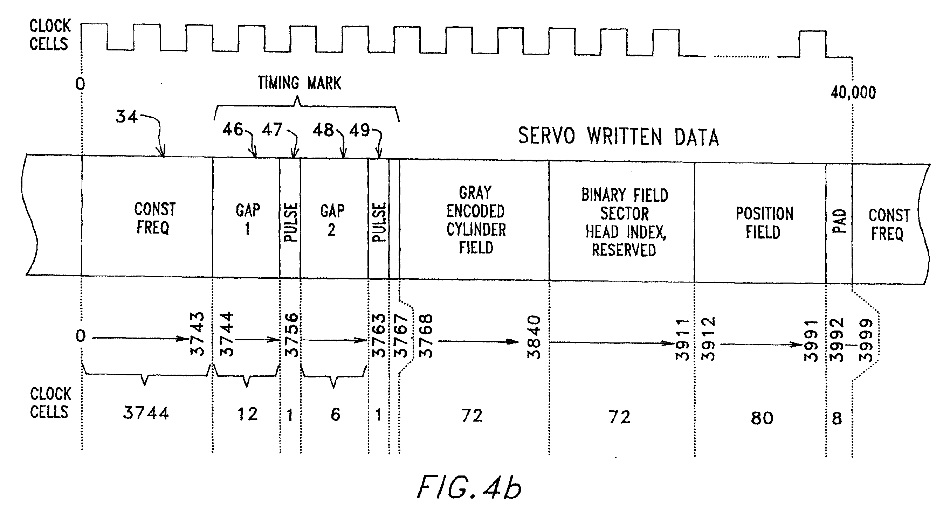

The gap and servo timing mark 36 of the servo sector 28 of the disk 10 of the present invention allows the disk drive to read the address information necessary to correctly position the transducer 17 over the data recording disk 10 and to determine that the transducer is at the beginning of the servo sector 28. As illustrated in FIG. 4a, preferably, the gap and servo timing mark field 36 of the present invention comprises a first space 46, a first pulse 47 downstream from the first space 46, a second space 48 downstream from the first pulse 47, and a second pulse 49 downstream from the second space 48. In the present invention, the time between the last constant frequency pulse and the first servo timing mark pulse 47 and the time between the first timing mark pulse 47 and the second pulse 49 is critical for synchronizing the disk drive since the servo control state machine must validate the gap and servo timing mark 36 for a particular data recording disk 10. Both the first space 46 and the second space 48 must be exactly positioned for proper timing determination and should not be repeated in the data sectors 30 to allow for maintaining servo synchronization.

The servo timing mark 36 precisely identifies a specific position within the servo sector 28 which is used as a timing reference. The inventors in the subject application have determined that, preferably, the first space 46 has a length of twelve (12) clock cells and the second space 48 has a length of six (6) clock cells. Furthermore, in a preferred embodiment, the first pulse 47 is a positive pulse and the second pulse is a negative pulse 49, although it is within the scope of the present invention to switch the negative and positive pulses.

Returning to FIG. 2a, the gray encoded address field 38 of the servo sector 28 of the disk 10 of the present invention provides a gray encoded address field to the disk drive for correctly positioning the transducer 17 over the correct cylinder on the data recording disk 10. In a preferred embodiment, the gray encoded address field 38 has a length of approximately seventy-two (72) clock cells.

The binary address field 40 of the servo sector 28 of the disk 10 of the present invention provides sector information, head information, and index information to the transducer 17 of the disk drive 12 for correctly positioning the transducer over the data recording disk 10 and to determine the rotational position of the disk 10 thereby allowing the data sector 30 to be free from identification information. In a preferred embodiment of the present invention, the binary address field 40 has a length of approximately seventy-two (72) clock cells.

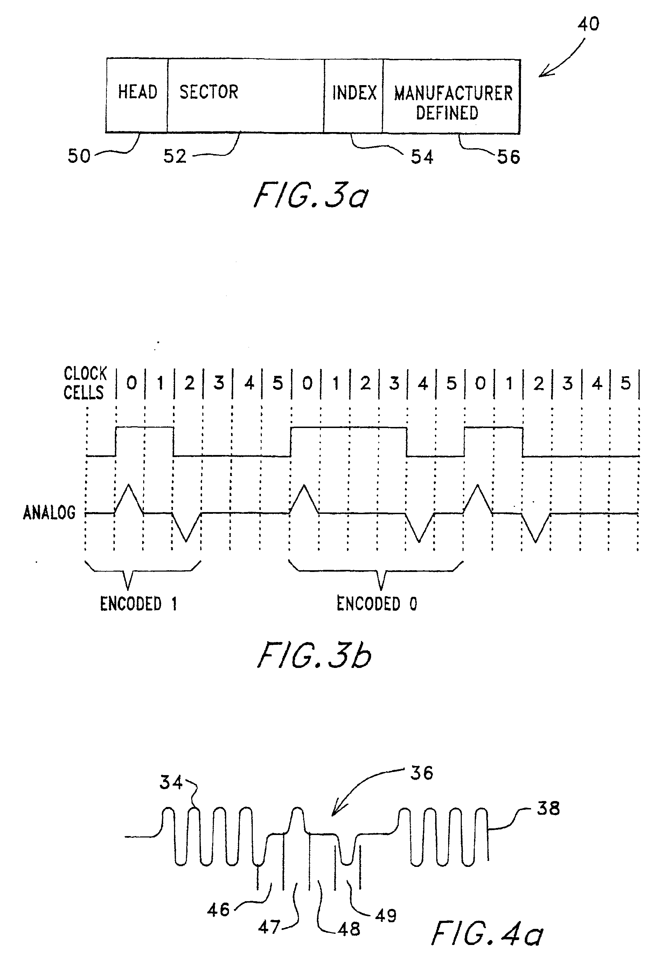

Furthermore, as illustrated in FIG. 3a, preferably, the binary address field 40 has a reserved portion which is used by the manufacturer to specify a particular format for the data recording disk 10. The reserved portion allows different products and different formats for different users. Preferably, the reserved portion has at least one (1) reserved bit 56 for each servo sector 28. In a most preferred embodiment, the binary address field 40 has one (1) head bit 50, seven (7) sector bits 52, one (1) index bit 54, and at least three (3) reserved bits 56 (where one (1) bit is equal to six (6) encoded clock cells.

As illustrated in FIG. 2a, the position field 42 of the servo sector 28 of the disk 10 of the present invention contains the actual servo information used to position the transducer 17, typically including a quadrature position error signal comprised of four (4) equal sub-fields. Preferably, the position field 42 has a length of approximately eighty (80) clock cells.

The position field 42 comprises four (4) position sub-fields 58, 60, 62, and 64 within the position field 42 . The four position sub-fields 58, 60, 62, and 64 have a two (2) clock cell space between them and are for a position system using quadrature detection.

The servo sector 28 of the disk 10 of the present invention further comprises a space 68 of eight (8) clock cells positioned downstream from the position field 42.

As illustrated in FIG. 6, the disk 10 of the present invention further comprises a disk cover or cartridge 10a surrounding the data recording disk 10 thereby forming an overall disk assembly 10b. In the present invention, the data recording disk 10 and the disk cartridge are configured to operate within a high density disk drive 12 with the disk cartridge being sized and shaped to conform to the size and shape of a standard 3.5 inch disk cartridge 13. In this way, the size and shape of the standard disk and disk cartridge 13 will not preclude it from being properly operated within the high density disk drive 12 of the present invention.

As illustrated in FIG. 5, the disk drive of the present invention comprises a read/write mechanism for reading from and writing to either a high density disk or a low density disk. The read/write mechanism includes a rotating mechanism which rotates at a first slower speed when operating in the low density mode and a second faster speed when operating in the high density mode. The rotating mechanism comprises a spindle motor and a hub with a chucking mechanism. Since a standard 3.5 inch standard disk has certain specifications which are not appropriate for rotating at faster speeds, it is important to maintain the slower speed for these disks when rotatingly operating within the disk drive. Therefore, the rotating mechanism of the present invention rotates the data recording disk 10 within the disk drive at the first slower speed and then increases to the second faster speed, if the disk drive determines that the disk is a high density disk. In the present invention, the first slower speed is approximately six hundred (600) rpm and the second faster speed is approximately one thousand (1000) rpm. It is within the scope of the present invention, however, to have a faster or slower first speed and a faster or slower second speed.

The disk drive of the present invention further comprises a mechanism for determining whether a low or high density disk is operating within the disk drive. In other words, the determination mechanism determines whether a low or high density disk is present in the disk drive while the read/write mechanism operates in the low density mode. This is because a high density disk can operate without damage at a low density disk speed but the reverse is not true. The determination mechanism forms part of the electronics illustrated in FIG. 5 and generally at 9. It includes an arrangement for attempting to read the servo information on a high density floppy disk (low density disks have no sectored servo data). If there is servo information written, this information can be read safely at the slower speed and then the disk is presumed to be a high density disk, the read/write mechanism operates at the high density mode causing the rotating mechanism to rotate the data recording disk 10 at the second faster speed.

The disk drive 12 of the present invention preferably includes a carriage assembly which is described in European Patent Application No. corresponding to U.S. Patent Application No. 08/965233 filed concurrently herewith and incorporated herein by reference. Furthermore, preferably, the disk drive 12 of the present invention includes a magnetic recording encoder system for a (1,7) channel having a 2/3 coding rate which is described in European Patent Application No. corresponding to U.S. Patent Application No. 08/965112 filed concurrently herewith and incorporated herein by reference.

In sum, the disk drive of the present invention operates in a high density mode for reading from or writing to a high density disk and alternatively operating in a low density mode for reading from and writing to a low density disk. The disk drive of the present invention is able to determine whether the disk rotatingly operating therein is a low density disk or a high density disk. If the disk is a low density disk, the disk drive maintains a slower speed and operates similar to a standard disk drive. If the disk is a high density disk, the disk drive increases its speed to write information on and read information from the high density disk.

The foregoing exemplary descriptions and the illustrative preferred embodiments of the present invention have been explained in the drawings and described in detail, with varying modifications and alternative embodiments being taught. While the invention has been so shown, described and illustrated, it should be understood by those skilled in the art that equivalent changes in form and detail may be made therein without departing from the true spirit and scope of the invention, and that the scope of the present invention is to be limited only to the claims except as precluded by the prior art. Moreover, the invention as disclosed herein, may be suitably practiced in the absence of the specific elements which are disclosed herein.

## Claims

1. In a high density, removable media-type disk for rotational use in a floppy disk drive having a read/write head, the disk including one or more servo sectors, the improvement comprising:
certain magnetically written information on the disk readable by the read/write head during normal operation of the disk drive, the information including:
a) a constant frequency field;
b) a gap and servo timing mark field;
c) a gray encoded address field;
d) a binary address field; and
e) a position field.

2. The improvement of claim 1 wherein the gap and servo timing mark field being positioned downstream from the constant frequency field, the gray encoded address field being positioned downstream from the gap and servo timing mark field, the binary address field being positioned downstream from the gray encoded address field, and the position field being positioned downstream from the binary address field.

3. The improvement of claim 1 wherein the information within each of said servo sectors consists essentially of:
a) said constant frequency field;
b) said gap and servo timing mark field being positioned downstream from the constant frequency field;
c) said gray encoded address field being positioned downstream from the gap and servo timing mark field;
d) said binary address field being positioned downstream from the gray encoded address field; and
e) said position field being positioned downstream from the binary address field.

4. The improvement of claim 1 wherein said disk includes a plurality of servo sectors and wherein the servo sectors are equally angularly spaced.

5. The improvement of claim 1 wherein the disk has between approximately eighty (80) and approximately two hundred (200) servo sectors per track.

6. The improvement of claim 1 wherein the gap and servo timing mark field has a first space, a first pulse downstream from the first space, a second space downstream from the first pulse, and a second pulse downstream from the second space.

7. The improvement of claim 6 wherein the first space has a length of approximately twelve (12) clock cells.

8. The improvement of claim 6 wherein the second space has a length of approximately six (6) clock cells.

9. The improvement of claim 6 wherein the first pulse is a positive pulse.

10. The improvement of claim 6 wherein the second pulse is a negative pulse.

11. The improvement of claim 1 wherein the gray encoded address field has a length of approximately seventy-two (72) clock cells.

12. The improvement of claim 1 wherein the binary address field has a length of approximately seventy-two (72) clock cells.

13. The improvement of claim 1 wherein the binary address field has sector information, head information, index information, and at least one (1) reserved information for each servo sector.

14. The improvement of claim 13 wherein the binary address field has one (1) head bit, seven (7) sector bits, one (1) index bit, and at least one (1) reserved bit wherein one (1) bit equals six (6) encoded clock cells.

15. The improvement of claim 1 3 wherein the binary address field includes three reserved bits.

16. The improvement of claim 1 wherein the position field has a length of approximately eighty (80) clock cells.

17. The improvement of claim 1 wherein the position field comprises four (4) position sub-fields within the position field.

18. The improvement of claim 17and further comprising a pad between each pair of adjacent position sub-fields.

19. The improvement of claim 18 wherein each of the pads has a length of approximately two (2) clock cells.

20. The improvement of claim 1 wherein said disk includes a data region containing data fields and wherein none of the data fields includes identification information thereby providing additional data density on the disk.

21. The improvement of claim 20 wherein the data region comprises between approximately one (1) and sixteen(16) data zones.

22. The improvement of claim 1 and further comprising a pad between the position field and the data field.

23. The improvement of claim 22 wherein the pad has a length of approximately eight (8) clock cells.
